(19) Europäisches Patentamt
European Patent Office
Office européen des brevets

(11) **EP 4 159 027 A1**

(12) **DEMANDE DE BREVET EUROPEEN**

(43) Date de publication:
**05.04.2023 Bulletin 2023/14**

(21) Numéro de dépôt: **21315192.1**

(22) Date de dépôt: **30.09.2021**

(51) Classification Internationale des Brevets (IPC):
**A01G 24/35** (2018.01)   **A01G 24/42** (2018.01)
**A01G 24/50** (2018.01)   **A01G 24/15** (2018.01)
**A01G 27/00** (2006.01)

(52) Classification Coopérative des Brevets (CPC):
**A01G 24/35; A01G 24/15; A01G 24/42;**
**A01G 24/50; A01G 27/00**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **Ennamany, Rachid**
**33800 Bordeaux (FR)**

(72) Inventeurs:
• **Ennamany, Rachid**
  **33800 BORDEAUX (FR)**
• **Guillaume, Bruno**
  **33400 Talence (FR)**
• **Anane, Rachid**
  **33000 Bordeaux (FR)**

(74) Mandataire: **Powis de Tenbossche, Roland et al**
**Cabinet Bede S.A.**
**Boulevard Général Wahis 15**
**1030 Bruxelles (BE)**

(54) **GRANULE ENVELOPPÉE ABSORBANTE ET LIBÉRANT DE L'EAU**

(57) Granule enveloppée absorbante et libérant de l'eau à base d'argile et d'hydrogel comprenant :
(a) un corps tridimensionnel essentiellement à base de gomme carraghénane kappa et d'alginate de sodium adapté pour absorber et libérer une première quantité d'eau, et
(b) un revêtement entourant sensiblement totalement la face extérieure du corps tridimensionnel comprenant des structures individuelles tridimensionnelles de diamètre équivalent de moins de 100 µm, lesdites structures individuelles tridimensionnelles comprenant à l'état sec au moins 90% en poids d'argile de la famille smectite, d'alginate de sodium et de gomme carraghénane iota.

Fig. 3

**Description**

L'invention a pour objet une granule enveloppée absorbante et libérant ce l'eau à base d'argile et d'hydrogel.

L'utilisation d'hydrogel pour retenir de l'eau est bien connue.

On connaît ainsi sur le marché des produits rétenteurs d'eau à base de polymère synthétique (polyacrylate, polyacrylamide) et de cellulose. Le polymère synthétique est destiné à former un réseau pour retenir les fibres de cellulose.

Par le document EP1399397, on connaît une matière solide particulaire absorbant de l'eau et gonflant dans l'eau, à base de matières minérales broyées incorporées dans un polymère spongieux avec des unités monomères éthyléniquement insaturées.

Par le document WO2021/006751, on a proposé pour la remise en état de zones dégradées ou désertiques, d'épandre à même le sol un mélange de fibres broyées, de substances absorbantes retenant l'eau, de graines, et des fertilisants, pour créer une zone superficielle apte à accumuler l'humidité.

Par le document CN109651653, on connaît des billes tridimensionnelles à base de gomme de carraghénane et d'alginate de sodium, formant des billes hydrogels présentant une bonne résistance à la pression, une résistance à la traction, une résistance à l'abrasion.

Tous ces produits permettent d'absorber une quantité d'eau, et de la fixer de manière assez durable, mais ne permettent pas un contrôle du relargage ou de la libération de l'eau de manière à éviter qu'en cas de périodes de grande chaleur, toute l'eau absorbée soit extraite rapidement hors de l'hydrogel.

Les granules de l'invention ont pour but d'être préparées en utilisant des composés naturels et totalement biodégradables (issus en particulier d'algues, avantageusement d'algues rouges et d'algues brunes), d'assurer pendant au moins 6 mois, avantageusement au moins 12 mois, à la fois une bonne rétention d'eau, et un contrôle du relargage ou de la libération de l'eau retenue, de bonnes propriétés mécaniques, et une conservation de ces propriétés mécaniques au cours du temps.

Les granules de l'invention placées dans le sol permettent de réduire les effets d'un stress hydrique, réduisant la disponibilité en substrat, une dormance de micro-organismes, donc une réduction de l'activité des micro-organismes. Les granules selon l'invention, et en partculier les enveloppes selon l'invention permettent de conserver une humidité partielle dans le sol, assurant ainsi de conserver une poroisité de celui-ci, ce qui est bénéfique pour une diffusion d'oxygène est réduite. En conservant une teneur en eau contrôlée stable dans des zones du sol, ces zones conservent à la fois des macropores et des micropores permettant une bonne diffusion de l'oxygène dans le sol, mais également une bonne évacuation de CO2 du sol après une période pluvieuse. Ceci permet d'assurer une bonne aération / respiration de ces zones, en particulier lors de périodes de canicule (30°C et plus).

De telles zones à humidité contrôlée en période de canicule permettent un meilleur développement de bactéries. On a remarqué qu'en incorporant les granules de l'invention dans une enveloppe ou poche à base de polymère ou copolymère biodégradable avec des unités butyrate ou dérivés de butyrate (en particulier à base de PHB), le développement des bactéries présentes dans le sol était favorisé. Ces bactéries originelles dans le sol se développent pour former après ajout de la poche contenant les granules de l'invention en des bactéries dont le cytoplasme est enrichi en nutriments, en particulier en polymère/copolymère avec des unités butyrate ou dérivés de butyrate, en particulier avec des unités hydroxy butyrate. De telles bactéries dopées en nutriment ont une activité accrue, permettant une prolifération de celles-ci, tout en leur assurant une meilleure résistance.

L'utilisation de poches à base de polymère / copolymère avec des unités butyrate (tels que Poly hydroxybutyrate, Poly hydroxy butyrate-co- hydroxy hexanoate ou Poly butyrate adipate téréphtalate) avec les granules semble former un milieu de culture propice au développement de bactéries endogènes, permettant ainsi d'éviter l'utilisation de bactéries exogènes au sol (non naturellement présentes dans le sol).

Ceci est particulièrement intéressant pour des sols avec des déficits hydriques, afin d'assurer aux plantes une meilleure résistance à la sécheresse.

Les granules selon l'invention comportent une enveloppe de protection contre des agressions mécaniques et animales, enveloppe de protection servant de moyen de contrôle de relargage d'eau sur une plus longue durée et de manière plus constante présente dans le cœur des granules.

La granule selon l'invention est une granule enveloppée absorbante et libérant de l'eau à base d'argile et d'hydrogel, ladite granule présentant un diamètre équivalent sec inférieur à 10cm, en particulier inférieur à 5cm, par exemple de 1mm à 3cm, en particulier de 1mm à 2cm. Les granules ont par exemple une forme sensiblement sphérique ou une forme allongée arrondie, éventuellement creuse. Des granules sous forme allongée sont par exemple des granules en forme de fils ou tubes ou portion de fils ou tube ou de spaghetti ou partie de spaghetti. D'autres formes sont possibles. Le diamètre équivalent sec est le diamètre des granules à l'état sensiblement sec, c'est-à-dire contenant 12% en poids d'eau ou moins. Le diamètre équivalent d'une granule présentant une enveloppe extérieure définissant une surface extérieure et un volume intérieur est égal à six fois le volume intérieur de la granule divisé par la surface extérieure. Si la granule avait été sensiblement sphérique, le diamètre équivalent aurait été égal à sensiblement le diamètre de la sphère. Au cas où la granule se présente sous une forme allongée creuse avec une paroi extérieure, le diamètre équivalent est défini par six fois le volume défini par la paroi extérieure divisé par la surface de la paroi extérieure. Une forme allongée creuse présente un intérêt, car créant un volume au moins partiellement sans structures individuelles, formant ainsi un volume tampon pour contenir de l'eau ou de l'air.

La granule selon l'invention comprend :

(a) un corps tridimensionnel essentiellement à base de gomme carraghénane kappa et d'alginate de sodium adapté pour absorber et libérer une première quantité d'eau, ledit corps comprenant à l'état sec (teneur en eau libre proche de 0%) au moins 50% en poids, avantageusement au moins 75% en poids, de gomme carraghénane kappa et d'alginate de sodium, le rapport en poids sec gomme de carraghénane kappa / alginate de sodium étant compris entre 1 : 10 et 10 : 1, ledit corps tridimensionnel présentant un diamètre équivalent sec (teneur en eau libre proche de 0%) compris entre 1mm et 5cm, avantageusement entre 1mm et 2cm, ce corps étant avantageusement sensiblement exempt d'argile (en particulier contenant moins de 10% en poids sec, avantageusement moins de 5% en poids sec, de préférence sensiblement 0% en poids sec d'argile), et

(b) un revêtement entourant sensiblement totalement la face extérieure du corps tridimensionnel, ledit revêtement dans l'état humide ayant une épaisseur moyenne surfacique au moins égale à un dixième à cinq fois le diamètre équivalent du corps tridimensionnel à l'état humide, ce revêtement comprenant des structures individuelles tridimensionnelles de diamètre équivalent de moins de 100$\mu$m, avantageusement de moins de 25$\mu$m, de préférence inférieure à 10$\mu$m, adaptées pour absorber et libérer une deuxième quantité d'eau, ledit revêtement comprenant à l'état sec (teneur en eau libre proche de 0% en poids) au moins 80% en poids sec, avantageusement au moins 90% en poids sec, de préférence au moins 95% en poids sec d'argile de la famille smectite, d'alginate de sodium et de gomme carraghénane iota, le rapport en poids sec gomme de carraghénane iota / alginate de sodium du revêtement étant compris entre 1 : 100 et 1 : 5000, avantageusement entre 1:500 et 1:3000, tandis que le rapport en poids sec argile de la famille smectite / (alginate de sodium + gomme de carraghénane iota) du revêtement étant compris entre 100 : 1 et 1000:1, avantageusement entre 200:1 et 600:1 ;

le rapport en poids sec corps tridimensionnel / revêtement étant compris entre 1 : 50 et 1 : 1000, avantageusement entre 1:100 et 1:500.

Parmi les argiles de la famille smectite, les smectites suivantes sont avantageuses: la stevensite, l'hectorite, la saponite, la bowlingite et la sauconite, et d'autres smectites se caractérisant par une teneur en magnésium et avantageusement un espacement variable entre feuillets.

A l'état humide le revêtement forme une couche épaisse entourant le corps tridimensionnel. L'épaisseur de la couche humide est avantageusement au moins égal à 50% du diamètre équivalent du corps tridimensionnel humide (ou à l'état gonflé au maximum).

Par argile de la famille smectite (de formule théorique $Si_8\ Al_4O_{20}(OH)_4\ .n\ H_2O$ ), on entend entre autres, la Montmorillonite, la pyrophyllite, le talc, la vermiculite, la sauconite, la saponite, et la nontronite, la Montmorillonite étant préférée. Dans le reste du présent mémoire, Montmorillonitte désigne de la Montmorillonite pure ou un mélange comprenant au moins 90% en poids sec de Montmorillonite et jusqu'à 10% en poids sec de pyrophyllite et/ou de talc et/ou de vermiculite et/ou de sauconite et/ou de sponite et/ou de nontronite et/ou d'hectorite et/ou de stevensite et/ou de bowlingite.

Parmi les smectites, on préfère les smectites contenant du sodium et du calcium, qui permettent un gonflement interfeuillet et également au niveau des mésopores.

La Montmorillonite répond avantageusement sensiblement la composition suivante :

$$(Ca_{0,14}Na_{0,02})\ (Al_{1,66}\ Mg_{0,36}\ Fe_{0,04})\ (Si_{3,90}\ Al_{0,10})\ O_{10}\ (OH)_2\ 1,02\ H_2O,$$

les chiffres mentionnés dans la formule pouvant varier de 5% en plus ou en moins.

L'argile est ainsi dispersée dans le revêtement sous forme de structures individuelles reliées l'une à l'autre par des liens gomme de carraghénane et/ou alginate du revêtement et/ou du corps tridimensionnel.

Des particularités de formes de réalisation avantageuses de l'invention sont une ou plusieurs des suivantes:

- l'argile de la famille smectite est de la montmorillonite sous forme de groupe de feuillets sensiblement parallèles présentant une surface moyenne en poids sec de feuillets de moins 400$\mu$m$^2$, avantageusement de moins de 100$\mu$m$^2$, de préférence de moins de 10$\mu$m$^2$, en particulier de moins de 1$\mu$m$^2$. De l'alginate de sodium et de la gomme de carraghénane s'étendent entre des feuillets de particules de smectite. En particulier, de l'alginate de sodium s'étend entre certains feuillets, tandis que de la gomme de carraghénane s'étend à l'extérieur de feuillets. La montmorillonite se présente sous la forme de.couche ou feuillets de silicate apte à absorber de l'eau, apte à retenir et fixer des cations calcium, sodium et potassium. La montmorillonite peut se présenter sous forme de nanoparticules.

- pour les structures individuelles tridimensionnelles, au moins 50% en poids de l'argile de la famille smectite (sèche) a une taille de particule moyenne en poids inférieure à 500nm, avantageusement inférieure à 300nm, de préférence inférieure à 100nm. Les particules de smectite de moins de 500nm, en particulier de moins de 100nm présentent un facteur de distribution granulométrique à 80% (en particulier à 90%) inférieur à 2, de préférence inférieur à 1.

Le facteur granulométrique caractérise l'étalement des particules. Ce facteur est déterminé en fonction du diamètre d80 correspondant au diamètre supérieur de la fraction pondérale des particules correspondant à 80% de l'ensemble des particules (d80 = diamètre du passant à 80% en poids), et du diamètre d20 correspondant au diamètre supérieur des particules de la fraction pondérale correspondant à 20% de l'ensemble des particules (d20 = diamètre du passant à 20% en poids).

Le facteur de distribution granulométrique à 80% (F80%) est alors déduit par la formule suivante:

$$F80\% = (d80 - d20) / ((d80 + d20) / 2)$$

avec d80 et d20 correspondant respectivement au diamètre du passant à 80% en poids et à 20% en poids de l'ensemble des particules.

$$F90\% = (d90 - d10) / ((d90 + d10) / 2)$$

avec d90 et d10 correspondant respectivement au diamètre du passant à 90% en poids et à 10% en poids de l'ensemble des particules.

Par "passant à x%", on entend la fraction des particules de diamètre inférieur à dx dont le poids correspond à x% du poids total des particules. Ces diamètres peuvent se déduire de la courbe pondérale de répartition granulométrique des particules.

Un facteur F80 ou F90 inférieur à 1 correspond à des particules de dimension très uniforme, assurant ainsi un revêtement présentant des propriétés très homogènes, pouvant se gonfler au contact de l'eau de manière très homogène.

- pour laquelle l'argile de la famille smectite a une distribution granulométrique à l'état sec présentant une première fraction de particules de moins de 800nm présentant une taille de particules moyenne en poids de moins de 300nm, en particulier de moins de 100nm et un facteur de distribution granulométrique à 80% (en particulier à 90%) inférieur à 2, avantageusement inférieur à 1, et une deuxième fraction de particules de taille comprise entre $1\mu m$ et $20\ \mu m$ et présentant une taille de particules moyenne en poids comprise entre $1,5\mu m$ et $10\mu m$.
  la présence de grosses particules dans le revêtement permet d'assurer un meilleur contrôle du passage d'eau du corps intérieur vers l'extérieur, et du milieu extérieur vers le corps intérieur, en formant des zones de stockage d'eau à relargage plus lent, mais à absorption plus rapide.

- le revêtement est formé à au moins 85% en poids sec de structures individuelles tridimensionnelles.

- le revêtement est formé au moins à 95% en poids sec de structures individuelles tridimensionnelles accolées les unes aux autres.

- au moins 90% en poids des structures individuelles tridimensionnelles sont formés chacune par une seule particule de la famille smectite, en particulier de montmorillonite de taille inférieure à 100 nm.

- le corps tridimensionnel à l'état humide forme un gel dur présentant une résistance à la compression de plus de $100g/cm^2$ mesurée à 20°C pour un enfoncement de moins de 6mm d'un cylindre plongeur de 2,54 cm de diamètre, les molécules d'alginate de sodium et gomme de carraghénane dudit corps tridimensionnel à l'état humide formant avec au moins un contre-ion choisi parmi Na, Ca et K un réseau simple et/ou double en présence d'eau, tandis que le revêtement a la forme d'un gel souple chargé en structures individuelles tridimensionnelles, ledit gel souple présentant une résistance à la compression de moins de $75g/cm^2$ pour un enfoncement de plus de 10mm, avantageusement de plus de 15 mm dudit cylindre plongeur de 2,54cm de diamètre.

- le revêtement comprend des structures individuelles d'argile de la famille smectite, en particulier de la montmorillonite, comprenant au moins à raison de 80% en poids, avantageusement au moins à raison de 90% en poids, (a) une première fraction de particules de moins de 200nm à l'état sec, avec une dimension moyenne en poids pour cette première fraction à l'état sec inférieure à 100nm, et (b) une deuxième fraction de particules à l'état sec de $1\mu m$ à $50\mu m$, en particulier de 1 à $20\mu m$,

le rapport en poids sec première fraction / deuxième fraction étant compris entre 1 : 10 et 10 : 1.

- le revêtement forme une couche contrôlant le passage d'eau du corps vers l'extérieur et de l'extérieur vers le corps. Cette couche freine le relargage d'eau provenant du corps principal par au moins un facteur 2.

- le corps tridimensionnel comprend (a) en tant que gomme carraghénane au moins 90% en poids sec, avantageusement au moins 95% en poids sec, de gomme carraghénane Kappa et (b) des sels solubles de calcium et de potassium, ledit corps sous forme de gel comprenant de 1 à 20g de gomme de carraghénane par litre d'eau et une quantité de sels de calcium et de potassium solubles dans l'eau à 20°C pour présenter une résistance à la rupture de gel mesurée à 20°C au moyen d'un cylindre plongeur de 2,54cm de diamètre de plus de 200g/cm$^2$.

- le revêtement comprend en tant que gomme carraghénane au moins 85% en poids sec, avantageusement au moins 95% en poids sec, de gomme carraghénane Iota et des sels solubles dans l'eau de calcium et/ou de sodium et/ou de potassium, lesdites structures sous forme de gel chargé en en particules de smectite présente une résistance à la rupture de gel à 20°C de moins de 100g/cm$^2$, avantageusement de moins de 50g/cm$^2$.

- le corps tridimensionnel comprend une quantité de gomme carraghénane kappa et une quantité de sels solubles de calcium et de potassium suffisantes pour présenter une capacité gélifiante mesurée avec un analyseur de texture avec un cylindre plongeur de diamètre de 2,54cm déplacé dans le gel depuis sa surface libre à une vitesse de 0,5mm/s, ladite capacité gélifiante ainsi mesurée à 20°C après déplacement du cylindre plongeur de 2mm dans le gel étant de 50 à 300g.

- ledit corps présente une élasticité pour un enfoncement d'au moins 3mm, avantageusement d'au moins 4mm, du cylindre plongeur dans le gel, avec une capacité gélifiante d'au moins 150 g, de préférence de 200g à 500g.

- la granule se présente sous la forme de granule sensiblement sèche prête à absorber et. retenir de l'eau, ladite granule sensiblement sèche caractérisée par un volume sec présentant une teneur en eau de moins de 12% en poids. La granule sensiblement sèche après contact avec de l'eau est adaptée pour absorber une quantité d'eau correspondant au moins à 100 fois le volume sec de la granule. La granule subit lors de cette absorption un gonflement.

- le corps tridimensionnel est préparé à partir d'une première solution aqueuse à base de gomme de carraghénane et d'alginate de sodium, ne contenant pas de sels solubles de sodium et de calcium, ladite première solution étant portée à une température de 70 à 90°C, cette première solution chaude est introduite sous forme de doses successives présentant chacune un volume inférieur à 1cm$^3$, dans une deuxième solution aqueuse contenant un ou des sels solubles de calcium à raison de 4 à 80g de calcium par litre et de sels solubles de potassium à raison de 4 à 80g de potassium par litre, et présentant une température de 70 à 90°C, et y sont maintenus dans cette deuxième solution sous agitation à une température de 70 à 90°C pendant au moins 60 minutes.

- le corps tridimensionnel se présente sous la forme d'un réseau d'au moins deux gels distincts, mais mélangés entre eux, avec des cations calcium et/ou potassium en commun, ledit corps présentant au moins en surface extérieure collante à base d'alginate de sodium, assurant ainsi une adhérence pour le revêtement.

- la granule même gorgée d'eau présente une densité supérieure à 1. La quantité d'argile présente dans le revêtement et l'épaisseur du revêtement étant choisies pour assurer une densité supérieure à 1 de la granule.

- la granule est associée à des bactéries aptes à fixer l'azote ou aptes à favoriser le développement racinaire (du genre mycorhize), en particulier au niveau de leur revêtement. A titre d'exemples avantageux, les bactéries seront du genre Rhizobium ou Frankia pour la fixation de l'azote. Les bactéries ajoutées sont avantageusement des bactéries endogènes au sol dans lequel des granules sont ajoutées.

- une combinaison d'une ou plusieurs de ces particularités.

L'invention a également pour objet une enveloppe présentant au moins une paroi poreuse perméable à l'eau (par exemple une toile de jute ou une toile de fibres naturelles bio dégradable, une toile à base de cellulose, un film poreux biodégradable, en particulier à base de polymères d'origine naturelle) définissant une chambre contenant une masse d'argile sous forme de particules de moins de $100\mu$m mélangée à au moins un engrais, dans laquelle sont placées ou noyées des granules selon l'invention telles que décrite ci-avant. La teneur en poids sec argile sous forme de particules de moins de $100\mu$m / granules selon l'invention est compris entre 2 : 1 et 100 : 1, en particulier entre 5 : 1 et 75 : 1, tel que 10 : 1; 15 : 1; 20 : 1; 30 : 1; 50 : 1; 60 : 1 et 70 : 1.

Ladite chambre présente avantageusement un volume libre ne comprenant pas d'argile et de granules, ce volume libre représentant de préfrence 10 à 30% du volume de la chambre. Ce volume libre permet de reprendre un certain gonflement de l'argile au contact d'eau, d'assurer une présence d'air dans la chambre, de former un volume libre prêt à recevoir de l'eau (par exemple suite à une pluie).

La masse d'argile est avantageusement chargée avec des bactéries (de préférence du type endogène au sol dans lequel l'enveloppe est destinée à être placée) aptes à fixer l'azote ou aptes à favoriser le développement racinaire (du genre mycorhize), en particulier au niveau de leur revêtement. A titre d'exemples avantageux, les bactéries seront du genre Rhizobium ou Frankia pour la fixation de l'azote.

La paroi poreuse est réalisée au moins partiellement en un polymère biodégradable, avantageusement de la famille polymère ou copolymères avec des unités butyrate ou des dérivés d'unités butyrate, en particulier avec des unités hydroxy butyrate, plus particulièrement des polymères et copolymères avec des unités ($\beta$-hydroxy butyrate), et/ou des unités (hydroxybutyrate-co-3-hydroxyhexanoate) et/ou des unités (butyrate adipate téréphtalate). La paroi est de préférence réalisée au moins partiellement en poly ($\beta$-hydroxy butyrate), en polymères ou copolymères (hydroxybutyrate-co-3-hydroxyhexanoate), en polymère/copolymère (butyrate adipate téréphtalate). Le polymère biodégradable est sélectionné pour subir une dégradation naturelle de 50% dans de la terre humide après plus de 5 semaines, en particulier plus de 10 semaines, de préférence plus de 26 semaines, plus particulièrement plus de 52 semaines, tel que par exemple après 1 à 2 ans.

Une paroi chargée avec des unités butyrate s'est avérée intéressante pour favoriser la croissance de bactéries, en particulier de bactéries endogènes déjà présentes dans le sol, et pour leur donner plus de vigueur, leur cytoplasme étant enrichi avec des unités butyrate, en particulier hydroxy butyrate.

La paroi poreuse est avantageusement chargée en fibres naturelles, en particulier en microfibres, de longueur inférieure à $1000\mu$m, de préférence de moins de $500\mu$m, plus particulièrement avec une longueur moyenne en poids sec de $100\mu$m à $500\mu$m, et/ou de particules, en particulier de particules d'argile, de façon avantageuse de particules de montmorillonite de moins de $100\mu$m.

Les fibres ou microfibres sont par exemples des fibres de cellulose, des fibres de chanvre, etc.

L'enveloppe est avantageusement sous une forme sèche comprenant une masse d'argile et de granules sensiblement sèches. Avant emploi de l'enveloppe pour conserver une teneur en humidité dans le sol, en particulier un sol aride, l'enveloppe est mise en contact avec de l'eau, éventuellement additionnée d'engrais soluble dans l'eau et/ou autres additifs bénéfiques pour les plantes, additifs solubles dans l'eau, en particulier plongée dans u bassin contenant de l'eau. De cette manière, l'enveloppe se charge en eau, éventuellement chargée en engrais et additifs, pour former ainsi une réserve d'eau et d'engrais/additifs, à libération contrôlée.

Pour accélérer le chargement en eau de l'enveloppe, l'eau est avantageusement portée à une température de 25 à 75°C, en particulier entre 50 et 65°C.

Une fois l'enveloppe chargée en eau, elle est prête pour relâcher de manière contrôlée l'eau stockée dans l'enveloppe, mais également pour se recharger lorsque le sol est humidifié, par exemple après une période de pluie.

L'enveloppe forme ainsi une réserve en eau, et avantageusement en nutriment et engrais pour des plantes, permettant alors aux plantes de pouvoir au moins résister à des périodes sèches. Ceci permet alors aux plantes de bien s'enraciner dans le sol.

L'invention a encore pour objet un procédé de préparation de granule enveloppée absorbante et à libération d'eau selon l'invention. Ce procédé comprend au moins les étapes suivantes :

- préparation de structures individuelles tridimensionnelles de diamètre équivalent de moins de $100\mu$m,

- préparation de corps tridimensionnels à base de gomme carraghénane et d'alginate de sodium présentant un diamètre équivalent compris entre 1mm et 5cm,

- mélange des corps tridimensionnels avec les structures individuelles tridimensionnelles pour former des corps tridimensionnels munis d'un revêtement de structures individuelles tridimensionnelles,

dans lequel la préparation de structures individuelles comprend au moins les étapes suivantes :

- préparation d'un mélange humide d'argile de la famille smectite sous forme de particules humides présentant un diamètre équivalent de moins de 100μm et d'alginate de sodium;

- préparation d'une solution de gomme carraghénane,

- mélange du mélange de particules humides d'argile de la famille smectite et d'alginate de sodium avec la solution de carraghénane, en des quantités pour assurer que pour le mélange ainsi préparé, le rapport en poids sec gomme de carrghénane / alginate de sodium soit compris entre 1 : 1 et 1 : 30;

- broyage ultrasonique pour former des structures tridimensionnelles humides;

dans lequel la préparation de corps tridimensionnels à basé de gomme carraghénane et d'alginate de sodium comprend au moins les étapes suivantes :

- préparation d'une première solution aqueuse de gomme de carraghénane et d'alginate de sodium avec un rapport en poids sec gomme de carraghénane / alginate de sodium compris entre 1 : 5 et 5 : 1, ladite solution étant portée et maintenue à une température comprise entre 70 et 90°C;

- préparation d'une deuxième solution aqueuse chaude de sels solubles de calcium avec une teneur en calcium de 4 à 80g/litre et de sels solubles de potassium avec une teneur en potassium de 4 à 80g/litre et éventuellement de sels solubles de magnésium avec une teneur en magnésium de 4 à 80g/litre, ladite solution de sels solubles étant portée et maintenue à une température de 70 à 90°C;

- introduction par doses successives de moins de 10 cm³ de première solution à température comprise entre 70 et 90°C dans la deuxième solution aqueuse maintenue à une température comprise entre 70 et 90°C, cette étape d'introduction par doses successives est avantageusement opérée par injection ou extrusion de quantités de première solution chaude dans la deuxième solution chaude;

- maintien de la deuxième solution aqueuse additionnée des doses successives à une température comprise entre 70 et 90°C, pendant au moins 60 minutes,

- retrait de corps tridimensionnels humides à base de carraghénane et d'alginate de sodium hors de la deuxième solution,

dans lequel on mélange les corps tridimensionnels humides avec des structures individuelles tridimensionnelles humides pour former un revêtement de structures individuelles tridimensionnelles humide entourant la face extérieure des corps tridimensionnels humides, les quantités de corps tridimensionnels humides et de structures individuelles tridimensionnelles humides étant telles que le rapport en poids sec corps tridimensionnel / revêtement étant compris entre 1 : 1 et 50 : 1, et

dans lequel on soumet éventuellement les corps tridimensionnels humides et munis d'un revêtement de structures individuelles tridimensionnelles humides à un séchage, avantageusement à moins de 100°C, en particulier à une température comprise entre 20 et 50°C, en particulier sous un vide (pression de moins de 0,5 10⁵ Pa, avantageusement pression comprise entre 0,1 et 0,4 10⁵ Pa).

L'invention a encore pour objet l'utilisation de granules enveloppées selon l'invention, en particulier intégrées dans une enveloppe selon l'invention, pour contrôler la disponibilité d'eau dans le sol, en particulier pour améliorer la pousse de végétaux, en particulier pour des cultures, des gazons, des prairies ou des arbres. L'invention permet ainsi de favoriser la plantation d'arbres dans des zones arides, en permettant aux arbres de pousser correctement pendant les premières années suivant sa plantation, ces années étant souvent les plus délicates pour assurer aux arbres de continuèr à pousser les années suivantes.

Même après dégradation des enveloppes, le sol est toujours chargé en argile modifié par de la gomme de carraghénane et/ou d'alginate de sodium, formant ainsi toujours un milieu apte à stocker de l'eau.

Des particularités et détails de l'invention ressortiront de la description détaillée suivante d'exemples de réalisation préférés, donnés à titre d'exemples uniquement, faisant référence aux dessins ci-annexés.

Dans ces dessins,

- la figure 1 est une vue schématique à plus grande échelle et en coupe, d'une portion d'un revêtement à base de structures individuelles de diamètre équivalent de moins de 100μm, ledit revêtement étant constitué essentiellement d'argile smectite montmorillonite, d'alginate de sodium, de gomme de carraghénane, et d'eau;

- la figure 2 est une vue schématique à plus grande échelle et en coupe d'une granule enveloppée comprenant un corps constitué essentiellement de gomme de carraghénane, d'alginate de sodium et d'eau, entouré d'un revêtement de structures individuelles telles que représentées à la figure 1,

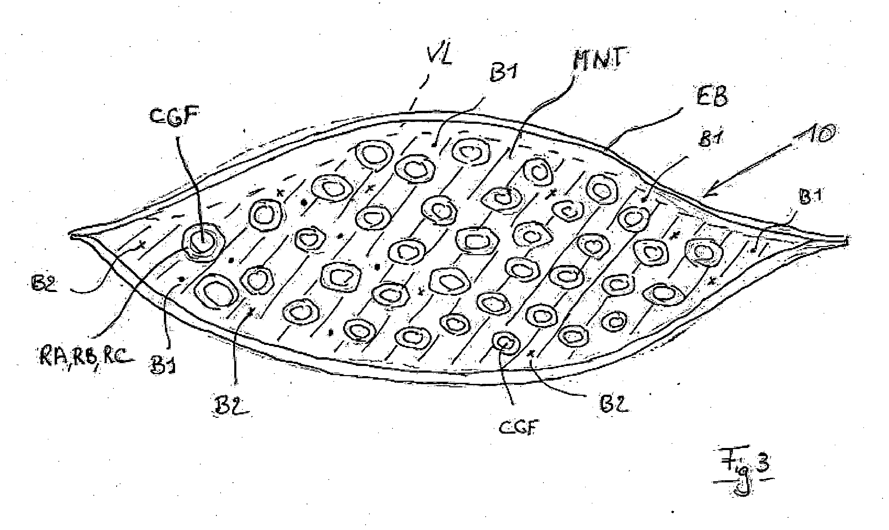

- la figure 3 est une vue schématique en coupe d'une enveloppe comprenant plusieurs granules de la figure 2, noyées dans un milieu comprenant essentiellement de l'eau, de l'argile et un ou des engrais.

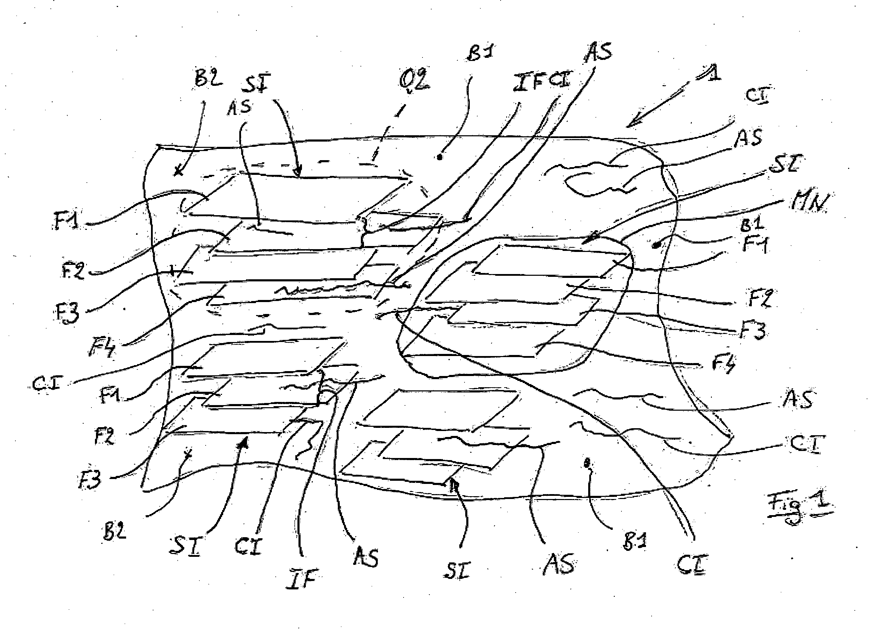

La figure 1 montre en coupe et à plus grande échelle, une portion d'un revêtement 1 de structures individuelles tridimensionnelles (SI) de diamètre équivalent de moins de 100μm, avantageusement de moins de 25μm, de préférence inférieure à 1μm, en particulier avec une granulométrie moyenne en poids de moins de 100nm. Les structures individuelles sont adaptées pour absorber et libérer une quantité d'eau (Q2). Les structures individuelles comprennent à l'état sec (teneur en eau libre proche de 0% en poids) au moins 95% en poids sec d'argile de la famille smectite - montmorillonite, d'alginate de sodium et de gomme carraghénane, le rapport en poids sec gomme de carraghénane / alginate de sodium du revêtement étant compris entre 1 : 100 et 1 : 5000, avantageusement entre 1:500 et 1:3000, tandis que le rapport en poids sec argile de la famille smectite / (alginate de sodium + gomme de carraghénane) du revêtement étant compris entre 100 : 1 et 1000:1, avantageusement entre 200:1 et 600:1.

Les structures individuelles montmorillonite se présentent sous la forme de feuillets superposées (F1,F2,F3,F4), par exemple de 2 à 10 feuillets espacés entre eux par une distance inter feuillets variable (IF). Dans l'espace inter feuillet, de l'alginate de sodium (AS) est présente, facilitant ainsi le passage d'eau entre les feuillets, améliorant également la teneur en eau stockée entre les feuillets, et format des point d'accrochage pour la gomme carraghénane (CI). Avanta-geusement une portion de l'alginate de sodium et de gomme de carraghénane (CI) s'étend hors de la structure montmorillonite (MN), hors de l'espace inter feuillet (IF).

Ce revêtement riche en structures individuelles montmorillonite est préparée de la manière suivante:
On a utilisé pour ces préparations différents types de montmorillonite contenant du magnésium, du calcium et du sodium en tant que cations inter feuillets. Les teneurs en % en poids sec en magnésium, calcium et sodium sont respectivement de 1 à2%; de 0,1 à 0,8%, et de 0,1 à 3%..

Montmorillonite type A : montmorillonite smectite nanométrique sous forme de poudre présentant une granulométrie moyenne en poids inférieure à 80 nm (environ 72nm). Une telle poudre est par exemple commercialisée sous le nom de Montmorillonite k10 par Nanoshel LLC, Wilmington, Delaware, USA. Cette poudre présente une surface spécifique moyenne de 200 à 300m²/g, et un pH de 3 à 4. La répartition granulométrique de la poudre est comprise entre 40 et 90 nm. Le facteur de distribution granulométrique à 80% est d'environ 0,28, tandis que le facteur granulométrique à 90% est d'environ 0,45. Cette montmorillonite a été traitée en surface par un ammonium quaternaire d'acide gras avec 14 à 18 atomes de carbone (saturée, insaturée avec une ou deux insaturations)

montmorillonite type B : montmorillonite nanométrique sous forme de poudre présentant une granulométrie moyenne en poids d'environ 10 nm. Une telle poudre est par exemple commercialisée sous le nom de Montmorillonite k10 par Nanoshel LLC, Wilmington, Delaware, USA. Cette montmorillonite est obtenu par broyage par sonification de la Montmorillonite type A

Montmorillonite type C : montmorillonite naturelle sous forme de poudre de granulométrie inférieure à 100μm

Les montmorillonites type A, type B et type C, avant traitement chimique éventuel, répondaient à la formule générale suivante:

$$(Ca_{0,14}Na_{0,02}) (Al_{1,66} Mg_{0,36} Fe_{0,04}) (Si_{3,90} Al_{0,10}) O_{10} (OH)_2 \, 1,02 \, H_2O$$

Pour former le revêtement, on a utilisé de la carraghénane Iota apte à former en présence d'eau un gel élastique, et de l'alginate de sodium.

Différents mélanges de Montmorillonite ont été préparés :

* Mélange montmorillonite 1 : 100% en poids de montmorillonite type A

* Mélange Montmorillonite 2 : 50% en poids de Montmorillonite type A + 50 % en poids de Montmorillonite type C

\* Mélange Montmorillonite 3 : 50% en poids de Montmorillonite type A + 15% en poids de Montmorillonite type B et 35% en poids de montmorillonite type C

On a mélangé les différents mélanges de montmorillonite respectivement avec de l'eau à 20°C, jusqu'à formation d'une pâte homogène. La quantité d'eau ajoutée au mélange de montmorillonite était d'environ 1 volume d'eau par volume de mélange montmorillonite. La pâte est malaxée pendant 30 minutes à 6 heures, par exemple de 2 à 3 heures. La température de la pâte durant le malaxage est maintenue à environ 20°C.

On ajoute aux différentes pâtes formées de l'alginate de sodium en poudre à raison de 0,1% en poids (on aurait pu y ajouter l'alginate de sodium à raison de 0,05 à 0,5% en poids), et on continue à malaxer pendant au moins 30 minutes (par exemple pendant 60 minutes à 6 heures, en particulier de 1 à 3 heures), pour assurer une bonne homogénéité de la pâte et pour assurer qu'au moins une portion de l'alginate de sodium (AS) pénètre (au moins partiellement) dans l'espace inter feuillet (IF) de particules ou grains de montmorillonite nanométrique (MN).

Après cet ajout d'alginate de sodium (AS), on prépare une solution aqueuse à 1% de chlorure de calcium, (la solution aurait pu être plus diluée, voire un peu plus concentrée, jusqu'à 2% ce chlorure de calcium. Une solution plus diluée permet un meilleur mélange homogène.) On ajoute cette solution de chlorure de sodium aux différents mélanges de montmorillonite à raison de 0,5% en poids. (on aurait pu ajouter aux mélanges de montmorillonite de 0,2 à 5% en poids de solution de chlorure de calcium, voire d'une solution diluée de chlorure de magnésium. Toutefois la présence de trop de chlorure s'est révélée ne pas être la plus adéquate pour la croissance de végétaux, en particulier d'arbres fruitiers. )

Les différents mélanges additionnés de chlorure de calcium sont malaxés pendant 1 à 6 heures, avant d'être soumis à un malaxage avec vibration ultra-sonique de plus de 10 hertz (en particulier de 20 à 100 hertz). Cette vibration ultra sonique assure un broyage et cisaillement des particules réduisant ainsi la taille de celles-ci, tout en assurant une homogénéisation et favorisant le passage d'alginate dans l'espace inter-feuillet de montmorillonite. La présence de calcium et/ou potassium assure des liens entre les molécules d'alginate de sodium.

On prépare ensuite une solution aqueuse à 1% en poids de carraghénane Iota, à une température de 70°C. (la solution aurait pu contenir moins de 2% de carraghénane iota, par exemple de 0,01 à 0,5% en poids). Une fois la solution refroidie à 20°C, on ajoute aux différents mélanges homogénéisés la solution de carraghénane iota à raison de 0,1% en poids (on aurait pu ajouter la solution à raison de 0,01 à 1% en poids, la quantité ajoutée dépendant de la teneur en carraghénane iota de la solution).

On mélange les différents mélanges à la solution de carraghénane iota, avec ajout continue d'eau à raison de 10% en poids du mélange. Le mélange est ainsi malaxé pendant 1 à 6 heures et soumis à un mélange avec vibration ultrasonique de plus de 10 Hertz (par exemple de 20 à 50 hertz) pendant 30 minutes à 3 heures.

Ceci assure que de la gomme de carraghénane iota (CI) est apte à envelopper au moins partiellement des feuillets F1,F2,F3,F4 de l'argile montmorillonite nanométrique (MN), et à assurer des liens entre particules d'argile.

La présence de calcium et/ou potassium assure des liens entre la gomme de carraghénane iota et l'alginate de sodium ou le réseau formé d'alginate de sodium.

On obtient ainsi différents mélanges de revêtement humide RA,RB,RC à base respectivement de montmorillonite A, B et C. Ces mélanges de revêtement humide RA,RB,RC comprennent outre de l'eau, de la montmorillonite nanométrique chargée en alginate de sodium, de la carraghénane iota, et de l'alginate de sodium. Des tests ont montré que par rapport à des revêtements comprenant respectivement de la montmorillonite nanométrique (sans alginate de sodium et non liée à de la carraghénane Iota), ou à de la montmorillonite nanométrique additionnée uniquement d'alginate de sodium, ou à de la montmorillonite nanométrique additionnée uniquement de carraghénane iota, les revêtements RA,RB et RC présentaient une meilleure capacité de retenue en eau (propriété stable dans le temps sur une période d'au moins 12 mois) et une libération en eau plus lente, et donc plus contrôlée.

Dans les revêtements humides RA,RB et RC, sans être lié à une théorie, il semble que les grains d'argile nanométriques montmorillonite sont reliés entre eux par des liens alginate de sodium (AS) - gomme de carraghénane iota (CI), assurant au revêtement de conserver une structure membranaire souple, flexible et élastique.

Avantageusement, ces revêtements humides sont associés à des bactéries aptes à fixer l'azote (B1) et/ou à des bactéries aptes à favoriser le développement racinaire (B2) (du genre mycorhize). A titre d'exemples avantageux, les bactéries (B1) seront du genre Rhizobium ou Frankia pour la fixation de l'azote.

Ces revêtements seront utilisés par après pour former une couche autour d'un corps essentiellement à base de gomme de carraghénane kappa (CK) et d'alginate de sodium (AS), pour former un gel présentant une fermeté de plus de 200 g/cm$^2$, avantageusement de 300 g/cm$^2$ à 600 g/cm$^2$, en particulier d'environ 350 g/cm$^2$, d'environ 400g/cm$^2$, et d'environ 450g/cm$^2$, à titre d'exemple.

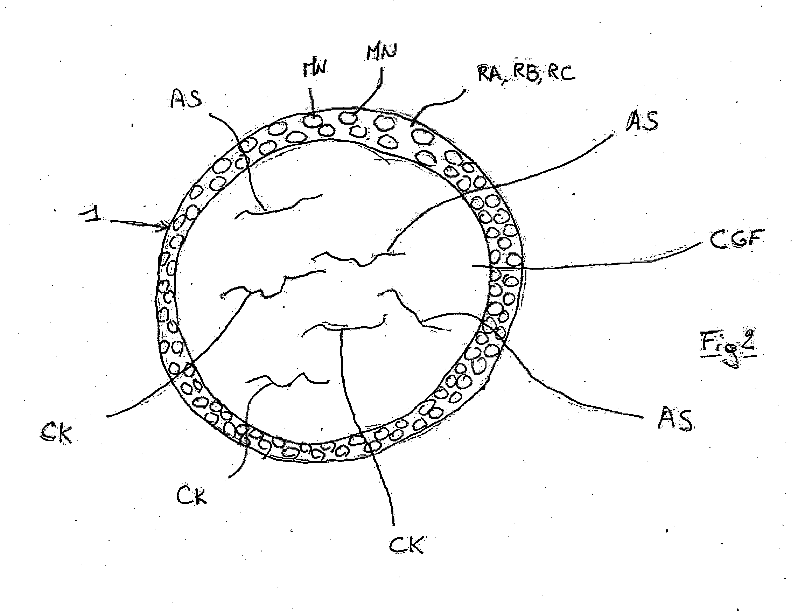

La figure 2 montre schématiquement une granule selon l'invention comportant un corps en gel ferme (CGF) apte à stocker une grande quantité d'eau recouvert d'une couche souple et flexible d'argile nanométrique (RA,RB,RC).

Ce corps se présente avantageusement sous la forme de macrosphères ou de corps sensiblement sphériques avantageusement de diamètre équivalent compris entre 5mm et 3cm. Le diamètre équivalent correspond à 6 fois le volume du corps divisé par son aire.

Le corps en gel ferme des exemples données à titre d'exemples préférées est préparée à partir d'eau, de carraghénane kappa, d'alginate de sodium, de chlorure de calcium et /ou de potassium, avec éventuellement un ajout de glucose et/ou de xylitol. La présence de calcium et/ou potassium assure des liens entre la gomme de carraghénane kappa et l'alginate de sodium.

Dans ces exemples de préparation de corps en gel ferme, on prépare une solution aqueuse de carraghénane kappa en mélangeant à une température d'environ 70°C de 1 à 10g (par exemple 3g, 5g, 7g) de carraghénane kappa par litre d'eau. Cette solution est mélangée jusqu'à obtention de la solubilisation complète de la gomme de carraghénane kappa.

On ajoute à cette solution chaude (température maintenue à environ 70°C) de 1 à 10 g d'alginate de sodium. On continue le mélange jusqu'à solubilisation complète de l'alginate. La quantité d'alginate ajoutée est avantageusement adaptée pour un rapport en poids sec alginate de sodium / carraghénane kappa compris entre 0,2 et 10, avantageusement entre 0,3 et 3, de préférence environ 1.

On prépare une solution aqueuse de chlorure de calcium (à raison de 0,001 à 0,2 mole par litre, avantageusement de 0,005 à 0,1 mole par litre, de préférence environ 0.01 à 0,05 mole par litre) et de chlorure de potassium (à raison de 0,001 à 0,2 mole par litre, avantageusement de 0,005 à 0,1 mole par litre, de préférence environ 0.005 à 0,01 mole par litre), avantageusement additionné de 0,1 à 5 g/litre de glucose et/ou de Xylitol.

Cette solution de chlorure de calcium et de magnésium est portée à une température de 15 à 40°C et est destinée à figer la forme des gouttes de solution chaude à 70°C de la solution à base de carraghénane Kappa et d'alginate de sodium, tombant ou introduite (goutte à goutte) dans la solution de chlorure de sodium et de magnésium. L'introduction de la solution à base de carraghénane kappa aurait pu être réalisée à plus basse température, mais cela a un effet sur la vitesse de réticulation. L'introduction aurait également pu être opérée par injection ou extrusion de la solution de carraghénane kappa et d'alginate de sodium dans un bain de chlorure de calcium et de magnésium. Une telle introduction aurait donné une forme allongée au corps tridimensionnel, éventuellement creux et avantageusement sous forme de fil ou spagetti enroulé.

On récupère les macrosphères ou spaghettis de carraghénane Kappa et d'alginate de sodium ainsi formé. La taille des macrosphères ou des spaghettis dépendra de la taille des gouttes introduites dans la solution de chlorure de calcium et de magnésium.

La taille des macrosphères ainsi obtenues est comprise entre 1mm et 5cm, mais est de façon avantageuse comprise entre 0,5cm et 2cm, par exemple 0,5cm, 0,8cm, 1 cm et 1,5cm. Si la macrosphère n'est pas exactement sphérique, la taille est déterminée par le diamètre équivalent correspondant au volume d'une macrosphère divisé par la surface extérieure.

Avantageusement, on contrôle la taille des macrosphères pour que au moins pour 95% en nombre, avantageusement au moins 99% en nombre des macrosphères, la taille de celles-ci soit comprise entre 0,5 et 2 fois la taille moyenne en nombre des macrosphères, en particulier comprise entre 0,8 et 1,2 fois la taille moyenne en nombre.

Dans l'exemple, on a ainsi préparé des macrosphères d'environ 1 cm de diamètre moyen en nombre.

On mélange ensuite ces macrosphères en gel ferme (CGF) respectivement avec les revêtements humides RA,RB et RC dans un tambour à faible vitesse et à basse température (15 à 30°C), pour enrober les macrosphères d'une couche de revêtement. Environ 2 à 5 volumes de revêtement sont utilisés par volume de macrosphères.

Ces macrosphères peuvent être utilisées en tant que telles pour retenir une quantité d'eau et la libérer de manière contrôlée. Toutefois, de manière avantageuse, les macrosphères enveloppées sont mélangées à de l'argile et/ou à des engrais, l'argile utilisée étant de préférence de la montmorillonite non traitée (MNT) avec de l'alginate de sodium et/ou avec de la gomme (en particulier de la gomme de carraghénane).

On prépare dans un premier temps, un mélange d'argile montmorillonite sous forme de poudre de moins de 100$\mu$m (taille moyenne en poids) avec de l'eau, à raison de 1 volume d'eau par volume d'argile. Ce mélange est opéré à une température de 15 à 30°C dans un tambour rotatif pendant 30 minutes à 6 heures. La vitesse de malaxage était réduite pour ne pas casser la structure particulaire de l'argile. On peut ajouter à ce mélange un ou des additifs et/ou engrais.

On ajoute à ce mélange d'argile montmorillonite -eau (MNT) (plus additifs et/ou engrais) des macrosphères (CGF) enveloppées d'un revêtement à nanostructures (RA,RB ou RC), à raison de 1 à 10 volumes de macrosphères enveloppées pour 5 à 20 volumes de mélange montmorillonite - eau. Ce mélange est opéré pour obtenir une distribution sensiblement homogène des macrosphères enveloppées dans le mélange d'argile/eau, l'argile formant ainsi une couche de protection entourant les macrosphères, et une couche permettant un glissement des macrosphères dans la couche d'argile (MNT).

On ajoute avantageusement à ce mélange montmorillonite - eau des bactéries aptes à fixer l'azote (B1) et/ou des bactéries aptes à favoriser le développement racinaire (B2) (du genre mycorhize), en particulier au niveau de leur revêtement. A titre d'exemples avantageux, les bactéries (B1) seront du genre Rhizobium ou Frankia pour la fixation de l'azote.

On encapsule ensuite ce mélange de microsphère dans une couche d'argile dans une enveloppe à paroi biodégradable (EB) et permettant le passage d'eau. Cette enveloppe est par exemple réalisée en poly (béta-hydroxy butyrate), avec une épaisseur de moins de 2mm d'épaisseur, en particulier de moins de 1mm d'épaisseur, par exemple avec une épaisseur de 0,5mm ou moins. La contenance de cette enveloppe biodégradable est par exemple de 250ml à 25 litres, avantageusement avec une contenance de moins de 5litres, voire moins de 3 litres. Des contenances de moins de 250ml peuvent être intéressantes pour des bacs de plantes de plus faible contenance. La paroi biodégradable (EB) est par exemple perforée pour assurer une perméabilité suffisante à l'eau. La paroi est avantageusement chargée en particules d'argile, par exemple à raison de 5 à 20% en poids. L'argile est par exemple de la montmorillonite de moins de 100$\mu$m, en particulier similaire à l'argile (MNT) formant la couche contenu dans l'enveloppe (EB). Le taux de remplissage de l'enveloppe (10) défini par la paroi (EB) est avantageusement de 80 à 90% du volume maximal de l'enveloppe, ceci permet de créer un volume libre (VL) pour reprendre un certain gonflement de l'argile contenu dans l'enveloppe (10), mais aussi pour contenir une certaine quantité d'air.

La libération d'eau hors de la poche (10) est contrôlée par la couche d'argile (MNT) en contact avec la paroi poreuse (EB) biodégradable (paroi perforée et chargée à raison de 5% en poids d'argile montmorillonite de moins de 100$\mu$m), par la teneur en en eau de la couche d'argile (MNT) par rapport à la teneur en eau dans le sol adjacent de la poche, la teneur en eau de l'argile (MNT) étant quant à elle contrôlée par la libération d'eau des microsphères (CGF) au travers du revêtement à base d'argile et par la différence de teneur en eau entre le coeur des microsphères et la couche d'argile MNT. Lors de périodes humides ou pluvieuses, les poches peuvent se regorger d'eau, le passage étant ici favoriser par la couche d'argile MNT protégée par la paroi poreuse EB, qui favorise le passage d'eau vers la couche d'argile, l'eau présente dans cette couche d'argile étant alors facilitée à passer dans les microsphères par le revêtement RA,RB,RC pour y être stockée, en prévision d'une libération contrôlée future.

L'argile présent dans les poches a été mélangée à des bactéries du genre Frankia pour favoriser une fixation d'azote et de bactéries mycorhise pour favoriser un développement racinaires des plantes.

Des tests sur des terrains soumis à un fort ensoleillement (température de 35°C et plus à 14heures) ont été réalisés.

Sur une première portion du terrain, le sol été simplement labouré avec plantation d'arbres tests (érable de 100cm de hauteur), sur une deuxième portion, on a retourné le sol et on y a placé dans le sol des enveloppes remplies de microsphères, à raison de 10 enveloppes de 1litres par m$^2$, les enveloppes étant enfuies à une profondeur de 30 à 50 cm.

En période de sécheresse de plus de 7 jours, on a arrosé le sol à raison de 10litres par m$^2$.

Après les deux mois d'été (juillet - août), on a remarqué que pour la première portion de terrain, plus de 75% des jeunes arbres avaient péris, tandis que pour la deuxième portion de terrain, près de 90% des jeunes arbres avaient résisté à la canicule (stress hydrique). Les enveloppes selon l'invention ont assuré une libération contrôlée d'eau dans le sol et non en surface, tout en assurant lors d'orages, de reprendre et stocker une quantité d'eau, tout en permettant une fixation amélioré d'azote, et un meilleur développement racinaire.

Pour le transport, les enveloppes peuvent être soumises à une étape de séchage, avantageusement uniquement partiel. Avant emploi, il est alors préférable de placer les enveloppes dans des bassins d'eau pour permettre aux enveloppes de se recharger en eau.

La paroi poreuse des enveloppes aurait également pu être réalisée au moyen d'autres polymères ou copolymères avec des unités butyrate ou des dérivés d'unités butyrate, en particulier avec des unités hydroxy butyrate, plus particulièrement des polymères et copolymères avec des unités ($\beta$-hydroxy butyrate), et/ou des unités (hydroxybutyrate-co-3-hydroxyhexanoate) et/ou des unités (butyrate adipate téréphtalate). La paroi est de préférence réalisée au moins partiellement en poly ($\beta$-hydroxy butyrate), en polymères ou copolymères (hydroxybutyrate-co-3-hydroxyhexanoate), en polymère/copolymère (butyrate adipate téréphtalate). Le polymère biodégradable est sélectionné pour subir une dégradation naturelle de 50% dans de la terre humide après plus de 5 semaines, en particulier plus de 10 semaines, de préférence plus de 26 semaines, plus particulièrement plus de 52 semaines, tel que par exemple après 1 à 2 ans.

Ce polymère ou co-polymère

La paroi poreuse est avantageusement chargée en fibres naturelles, en particulier en micro-fibres, de longueur inférieure à 1000$\mu$m, de préférence de moins de 500$\mu$m, plus particulièrement avec une longueur moyenne en poids sec de 100$\mu$m à 500$\mu$m.

Les fibres ou micro-fibres sont par exemples des fibres de cellulose, des fibres de chanvre, etc.

Même après dégradation des enveloppes, le sol est toujours chargé en argile modifié par de la gomme de carraghénane et/ou d'alginate de sodium, formant ainsi toujours un milieu apte à stocker de l'eau.

Des tests dans des sols ont également montré:

- des propriétés abasorbantes d'eau et relarguantes d'eau sous terre de manière modulable et ce entre le premier jour du placement des poches dans le sol, jusque 78 semaines et plus après le placement de la poche.

- le polymère PHB de l'enveloppe sert au développement et la multiplication de bactéries endogènes (déjà présentes dans le sol) pendant plus de 78 semaines.

- les plantations d'arbres dans des zones arides sont plus résistantes et ont le temps de s'acclimater par une libération contrôlée d'eau au niveau des racines.

**Revendications**

1. Granule enveloppée absorbante et libérant. de l'eau à base d'argile et d'hydrogel, ladite granule enveloppée présentant une paroi extérieure définissant un volume avec un diamètre équivalent sec inférieur à 10cm, (le diamètre équivalent de la granule enveloppée étant égal 6 fois le volume defini par la paroi extérieure de la granule divisé par la surface extérieure de la paroi extérieure de la granule enveloppée), ladite granule enveloppée comprenant :

   (a) un corps tridimensionnel essentiellement à base de gomme carraghénane kappa et d'alginate de sodium adapté pour absorber et libérer une première quantité d'eau, ledit corps comprenant à l'état sec au moins 50% en poids, avantageusement au moins 75% en poids de gomme carraghénane kappa et d'alginate de sodium, le rapport en poids sec gomme de carraghénane kappa/ alginate de sodium étant compris entre 1 : 10 et 10 : 1, ledit corps tridimensionnel présentant un diamètre équivalent compris entre 1mm et 5cm, et
   (b) un revêtement entourant sensiblement totalement la face extérieure du corps tridimensionnel, ledit revêtement dans l'état humide ayant une épaisseur moyenne surfacique au moins égale à un dixième à cinq fois le diamètre équivalent du corps tridimensionnel à l'état humide, ce revêtement comprenant des structures individuelles tridimensionnelles de diamètre équivalent de moins de $100\mu m$, avantageusement de moins de $25\mu m$, adaptées pour absorber et libérer une deuxième quantité d'eau, lesdites structures individuelles tridimensionnelles comprenant à l'état sec au moins 90% en poids, avantageusement au moins 95% en poids sec, d'argile de la famille smectite, d'alginate de sodium et de gomme carraghénane iota, le rapport en poids sec gomme de carraghénane iota/ alginate de sodium du revêtement étant compris entre 1 : 100 et 1 : 5000, tandis que le rapport en poids sec argile de la famille smectite / (alginate de sodium + gomme de carraghénane iota) du revêtement étant compris entre 100 : 1 et 1000:1, avantageusement entre 200:1 et 600:1 ;

   le rapport en poids sec corps tridimensionnel / revêtement étant compris entre 1 : 50 et 1 : 1000, avantageusement entre 1:100 et 1:500.

2. Granule enveloppée selon la revendication 1, pour laquelle l'argile de la famille smectite est de la montmorillonite sous forme de groupe de feuillets sensiblement parallèles présentant une surface moyenne en poids sec de feuillets de moins $400\mu m^2$, avantageusement de moins de $100\mu m^2$.

3. Granule enveloppée selon la revendication 1 ou 2, dans laquelle pour les structures individuelles tridimensionnelles, au moins 50% en poids de l'argile de la famille smectite a une taille de particule moyenne en poids inférieure à 500nm, avantageusement inférieure à 300nm, de préférence inférieure à 100nm.

4. Granule enveloppée selon la revendication 3, pour laquelle l'argile de la famille smectite a une distribution granulométrique à l'état sec présentant une première fraction de particules de moins de 800nm présentant une taille de particules moyenne en poids de moins de 300nm et un facteur de distribution granulométrique à 80% inférieur à 2, et une deuxième fraction de particules de taille comprise entre $1\mu nm$ et $20 \mu m$ et présentant une taille de particules moyenne en poids comprise entre $1,5\mu m$ et $10\mu m$.

5. Granule enveloppée selon la revendication 4, **caractérisée en ce que** le revêtement est formé à au moins 85% en poids sec de structures individuelles tridimensionnelles.

6. Granule enveloppée selon la revendication 5, **caractérisée en ce que** le revêtement est formé au moins à 95% en poids sec de structures individuelles tridimensionnelles accolées les unes aux autres.

7. Granule enveloppée selon l'une des revendications 3 à 6, **caractérisée en ce que** 90% en poids des structures individuelles tridimensionnelles sont formés chacune par une seule particule de la famille smectite, en particulier de montmorillonite de taille inférieure à 100 nm.

8. Granule enveloppée selon l'une quelconque des revendications précédentes, **caractérisée en ce que** le corps tridimensionnel à l'état humide forme un gel dur présentant une résistance à la compression de plus de $100g/cm^2$ mesurée à 20°C pour un enfoncement de moins de 6mm d'un cylindre plongeur de 2,54 cm de diamètre, les molécules d'alginate de sodium et gomme de carraghénane kappa dudit corps tridimensionnel à l'état humide formant avec au moins un contre-ion choisi parmi Na, Ca et K un réseau simple et/ou double en présence d'eau, tandis que le revêtement a la forme d'un gel souple chargé en structures individuelles tridimensionnelles, ledit gel souple présentant une résistance à la compression de moins de $75g/cm^2$ pour un enfoncement de plus de 10mm, avantageusment de plus de 15 mm.

9. Granule enveloppée selon l'une quelconque des revendications précédentes, **caractérisée en ce que** le revêtement comprend des structures individuelles d'argile de la famille smectite, en particulier de la montmorillonite, comprenant au moins à raison de 80% en poids, avantageusement au moins à raison de 90% en poids, (a) une première fraction de particules de moins de 200nm à l'état sec, avec une dimension moyenne en poids pour cette première fraction à l'état sec inférieure à 100nm, et (b) une deuxième fraction de particules à l'état sec de $1\mu m$ à $50\mu m$, en particulier de 1 à $20\mu m$,
le rapport en poids sec première fraction / deuxième fraction étant compris entre 1 : 10 et 10 : 1.

10. Granule enveloppée selon l'une quelconque des revendications précédentes, **caractérisée en ce que** le revêtement forme une couche contrôlant le passage d'eau du corps tridimensionnel vers l'extérieur et de l'extérieur vers le corps tridimensionnel.

11. Granule enveloppée selon l'une quelconque des revendications précédentes, **caractérisée en ce que** le corps tridimensionnel comprend (a) en tant que gomme carraghénane au moins 85% en poids sec, avantageusement au moins 95% en poids sec, de gomme carraghénane Kappa et (b) des sels solubles de calcium et de potassium, ledit corps sous forme de gel comprenant de 1 à 20g de gomme de carraghénane par litre d'eau et une quantité de sels de calcium et de potassium solubles dans l'eau à 20°C pour présenter une résistance à la rupture de gel mesurée à 20°C au moyen d'un cylindre plongeur de 2,54cm de diamètre de plus de $200g/cm^2$.

12. Granule enveloppée selon l'une quelconque des revendications précédentes, **caractérisée en ce que** le revêtement comprend en tant que gomme carraghénane au moins 90% en poids sec, avantageusement au moins 95% en poids sec, de gomme carraghénane Iota et des sels solubles dans l'eau de calcium et/ou de sodium et/ou de potassium, lesdites structures sous forme de gel chargé en en particules de smectite présente une résistance à la rupture de gel à 20°C de moins de $100g/cm^2$, avantageusement de moins de $50g/cm^2$.

13. Granule enveloppée selon la revendication précédente, **caractérisé en ce que** le corps tridimensionnel comprend une quantité de gomme carraghénane kappa et une quantité de sels solubles de calcium et de potassium suffisantes pour présenter une capacité gélifiante mesurée avec un analyseur de texture avec un cylindre plongeur de diamètre de 2,54cm déplacé dans le gel depuis sa surface libre à une vitesse de 0,5mm/s, ladite capacité gélifiante ainsi mesurée à 20°C après déplacement du cylindre plongeur de 2mm dans le gel étant de 50 à 300g.

14. Granule enveloppée selon la revendication précédente, **caractérisée en ce que** ledit corps présente une élasticité pour un enfoncement d'au moins 3mm, avantageusement d'au moins 4mm, du cylindre plongeur dans le gel, avec une capacité gélifiante d'au moins 150 g, de préférence de 200g à 500g.

15. Granule enveloppée selon l'une quelconque des revendications précédentes, **caractérisé en ce qu'**elle se présente sous la forme de granule sensiblement sèche prête à absorber et retenir de l'eau, ladite granule sensiblement sèche **caractérisée par** un volume sec présentant une teneur en eau de moins de 12% en poids, et **en ce que** la granule sensiblement sèche après contact avec de l'eau absorbe une quantité d'eau correspondant au moins à 100 fois le volume sec de la granule.

16. Granule enveloppée selon l'une quelconque des revendications précédentes, **caractérisé en ce que** le corps tridimensionnel est préparé à partir d'une première solution aqueuse à base de gomme de carraghénane kappa et d'alginate de sodium, ne contenant pas de sels solubles de sodium et de calcium, ladite première solution étant portée à une température de 70°C à 90°C, cette première solution chaude, avantageusement avec une température comprise entre 70 et 90°C est introduite sous forme de doses successives présentant chacune un volume inférieur à $1cm^3$, dans une deuxième solution aqueuse contenant un ou des sels solubles de calcium à raison de 4 à 80g de calcium par litre et de sels solubles de potassium à raison de 4 à 80g de potassium par litre, et présentant une température de 70 à 90°C, et y sont maintenus dans cette deuxième solution sous agitation à une température de 70 à 90°C pendant au moins 60 minutes.

17. Granule enveloppée selon l'une quelconque des revendications précédentes, **caractérisée en ce que** le corps tridimensionnel se présente sous la forme d'un réseau d'au moins deux gels distincts, mais mélangés entre eux, avec des cations calcium et/ou potassium en commun, ledit corps présentant au moins en surface extérieure collante à base d'alginate de sodium, assurant ainsi une adhérence pour le revêtement.

18. Granule enveloppée selon l'une quelconque des revendications précédentes, **caractérisée en ce qu'**elle est associée à des bactéries aptes à fixer l'azote, de préférence du genre Rhizobium ou Frankia et/ou à des bactéries aptes à favoriser le développement racinaire, de préférence du genre mycorhize. ), en particulier au niveau de leur revêtement.

19. Enveloppe présentant au moins une paroi poreuse perméable à l'eau définissant une chambre contenant une masse d'argile sous forme de particules de moins de $100\mu$m mélangée à au moins un engrais, dans laquelle sont placées des granules selon l'une quelconque des revendications précédentes, ladite chambre présentant avantageusement un volume libre ne comprenant pas d'argile et de granules, ce volume libre représentant de préfrence de 10 à 30% du volume de la chambré.

20. Enveloppe selon la revendication 19, **caractérisée en ce que** la paroi poreuse est réalisée au moins partiellement en un polymère biodégradable, avantageusement avec des unités butyrate ou dérivés de butyrate, en particulier d'hydroxy butyrate.

21. Enveloppe selon la revendication 19 ou 20, comprenant une masse d'argile et de granules sensiblement sèches.

22. Enveloppe selon l'une quelconque des revendications 19 à 21, **caractérisée en ce que** la masse d'argile est associée à des bactéries aptes à fixer l'azote, de préférence du genre Rhizobium ou Frankia et/ou à des bactéries aptes à favoriser le développement racinaire, de préférence du genre mycorhize ), en particulier au niveau de leur revêtement.

23. Procédé de préparation de granule enveloppée absorbante et libérant de l'eau selon l'une quelconque des revendications 1 à 18, ledit procédé comprenant au moins les étapes suivantes :

- préparation de structures individuelles tridimensionnelles de diamètre équivalent de moins de $100\mu$m,
- préparation de corps tridimensionnels à base de gomme carraghénane et d'alginate de sodium présentant un diamètre équivalent compris entre 1mm et 5cm,
- mélange des corps tridimensionnels avec les structures individuelles tridimensionnelles pour former des corps tridimensionnels munis d'un revêtement de structures individuelles tridimensionnelles,

dans lequel la préparation de structures individuelles comprend au moins les étapes suivantes :

- préparation d'un mélange humide d'argile de la famille smectite sous forme de particules humides présentant un diamètre équivalent de moins de $100\mu$m et d'alginate de sodium;
- préparation d'une solution de gomme carraghénane iota,
- mélange du mélange de particules humides d'argile de la famille smectite et d'alginate de sodium avec la solution de carraghénane, en des quantités pour assurer que pour le mélange ainsi préparé, le rapport en poids sec gomme de carraghénane / alginate de sodium soit compris entre 1 : 1 et 1 : 30;
- broyage ultrasonique pour former des structures tridimensionnelles humides;

dans lequel la préparation de corps tridimensionnels à base de gomme carraghénane et d'alginate de sodium comprend au moins les étapes suivantes :

- préparation d'une première solution aqueuse de gomme de carraghénane et d'alginate de sodium avec un rapport en poids sec gomme de carraghénane / alginate de sodium compris entre 1 : 5 et 5 : 1, ladite solution étant portée et maintenue à une température comprise entre 70 et 90°C;
- préparation d'une deuxième solution aqueuse chaude de sels solubles de calcium avec une teneur en calcium de 4 à 80g/litre et de sels solubles de potassium avec une teneur en potassium de 4 à 80g/litre et éventuellement des sels solubles de magnésium avec une teneur en magnésium de 4 à 80g/litre, ladite solution de sels solubles étant portée et maintenue à une température de 70 à 90°C;

- introduction par doses successives de moins de 1cm$^3$ de première solution à température comprise entre 70 et 90°C dans la deuxième solution aqueuse maintenue à une température comprise entre 70 et 90°C;
- maintien de la deuxième solution aqueuse additionnée des doses successives à une température comprise entre 70 et 90°C, pendant au moins 60 minutes,
- retrait de corps tridimensionnels humides à base de carraghénane et d'alginate de sodium hors de la deuxième solution,

dans lequel on mélange les corps tridimensionnels humides avec des structures individuelles tridimensionnelles humides pour former un revêtement de structures individuelles tridimensionnelles humides entourant la face extérieure des corps tridimensionnels humides, les quantités de corps tridimensionnels humides et de structures individuelles tridimensionnelles humides étant telles que le rapport en poids sec corps tridimensionnel / revêtement étant compris entre 1 : 1 et 50 : 1, et

dans lequel on soumet éventuellement les corps tridimensionnels humides et munis d'un revêtement de structures individuelles tridimensionnelles humides à un séchage, avantageusement à moins de 100°C, en particulier sous un vide.

24. Utilisation de granules enveloppées selon l'une quelconque des revendications 1 à 18 , en particulier intégrées dans une enveloppe selon l'une des revendications 19 à 22, pour contrôler la disponibilité d'eau dans le sol, en particulier pour améliorer la pousse de végétaux, en particulier pour des cultures, des gazons, des prairies ou des arbres.

Fig 1

EP 4 159 027 A1

Fig. 2

Fig. 3

Europäisches
Patentamt

European
Patent Office

Office européen
des brevets

# RAPPORT DE RECHERCHE EUROPEENNE

Numéro de la demande

**EP 21 31 5192**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 921 043 A1 (TOYO TIRE & RUBBER CO [JP]) 23 septembre 2015 (2015-09-23) | 1,10,24 | INV. A01G24/35 |
| A | * pages 30-37; figures 1, 2a, 5 * | 2-9, 11-23 | A01G24/42 A01G24/50 A01G24/15 |
| A | WO 87/03168 A1 (BEGHIN SAY SA [FR]) 4 juin 1987 (1987-06-04) * revendications 1, 8; figures 1a, 3-4 * * page 4, alinéa dernière – page 5, alinéa * * page 5, alinéa troisième * | 1,19,23, 24 | A01G27/00 |
| A | EP 0 156 786 A2 (DICALITE EUROPE NORD [BE]) 2 octobre 1985 (1985-10-02) * revendications 1-2, 7-8, 12-14, 18-19, 23-26; figures 1-2, 5 * | 1,19,23, 24 | |
| A | WO 2018/217888 A1 (MOSAIC CO [US]) 29 novembre 2018 (2018-11-29) * revendications 1-19; figure 2 * | 1-24 | |

DOMAINES TECHNIQUES RECHERCHES (IPC)

**A01G**

Le présent rapport a été établi pour toutes les revendications

| Lieu de la recherche | Date d'achèvement de la recherche | Examinateur |
|---|---|---|
| **La Haye** | **9 mars 2022** | **Guillem Gisbert, I** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 31 5192

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-03-2022

| Document brevet cité au rapport de recherche | | Date de publication | Membre(s) de la famille de brevet(s) | | Date de publication |
|---|---|---|---|---|---|
| EP 2921043 | A1 | 23-09-2015 | CN | 104780754 A | 15-07-2015 |
| | | | EP | 2921043 A1 | 23-09-2015 |
| | | | JP | 5615462 B1 | 29-10-2014 |
| | | | JP | 5913452 B2 | 27-04-2016 |
| | | | JP | 6029620 B2 | 24-11-2016 |
| | | | JP | 2014176397 A | 25-09-2014 |
| | | | JP | 2014176398 A | 25-09-2014 |
| | | | JP | WO2014077183 A1 | 05-01-2017 |
| | | | KR | 20150072427 A | 29-06-2015 |
| | | | US | 2015291480 A1 | 15-10-2015 |
| | | | WO | 2014077183 A1 | 22-05-2014 |
| WO 8703168 | A1 | 04-06-1987 | AT | 57058 T | 15-10-1990 |
| | | | AU | 598783 B2 | 05-07-1990 |
| | | | CA | 1320640 C | 27-07-1993 |
| | | | EP | 0230799 A1 | 05-08-1987 |
| | | | ES | 2017637 B3 | 01-03-1991 |
| | | | FR | 2590761 A1 | 05-06-1987 |
| | | | GR | 3001106 T3 | 12-05-1992 |
| | | | JP | S63501768 A | 21-07-1988 |
| | | | PT | 83833 A | 01-12-1986 |
| | | | US | 5081791 A | 21-01-1992 |
| | | | WO | 8703168 A1 | 04-06-1987 |
| EP 0156786 | A2 | 02-10-1985 | EP | 0156786 A2 | 02-10-1985 |
| | | | LU | 85256 A1 | 14-10-1985 |
| WO 2018217888 | A1 | 29-11-2018 | AR | 111889 A1 | 28-08-2019 |
| | | | AU | 2018273388 A1 | 16-01-2020 |
| | | | BR | 112019024590 A2 | 09-06-2020 |
| | | | CA | 3064573 A1 | 29-11-2018 |
| | | | CL | 2019003396 A1 | 07-08-2020 |
| | | | CL | 2021000164 A1 | 13-08-2021 |
| | | | CN | 110770196 A | 07-02-2020 |
| | | | CO | 2019014586 A2 | 17-01-2020 |
| | | | EP | 3634923 A1 | 15-04-2020 |
| | | | KR | 20200026201 A | 10-03-2020 |
| | | | PH | 12019550247 A1 | 11-01-2021 |
| | | | US | 2018339951 A1 | 29-11-2018 |
| | | | US | 2020231515 A1 | 23-07-2020 |
| | | | WO | 2018217888 A1 | 29-11-2018 |
| | | | ZA | 201908225 B | 25-11-2020 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- EP 1399397 A
- WO 2021006751 A

- CN 109651653